# EUROPEAN PATENT APPLICATION

(11) **EP 4 340 438 A1**
(43) Date of publication of application: **20.03.2024**
(21) Application number: 22806471.3
(22) Date of filing: 22.04.2022
(51) Int. Cl.: H04W 24/08, H04W 24/10

(54) **POSITIONING METHOD AND APPARATUS**

(30) Priority: 11.05.2021 CN 202110512113
(71) Applicant: Datang Mobile Communications Equipment Co., Ltd., Beijing 100085 (CN)
(72) Inventor: ZHAO, Zheng, Beijing 100085 (CN); REN, Bin, Beijing 100085 (CN); REN, Xiaotao, Beijing 100085 (CN); DA, Ren, Beijing 100085 (CN)
(74) Representative: Körfer, Thomas
(86) International application number: PCT/CN2022/088568
(87) International publication number: WO 2022/237501

(57) **Abstract**

Disclosed in the present application are a positioning method and apparatus, which are used to ensure that PRS measurement is performed in a measurement gap. The positioning method provided in the present application comprises: determining recommendation information of a positioning reference signal (PRS); and sending the recommendation information of the PRS to control PRS measurement in a measurement gap.

## Description

### Cross Reference to Related Application

The present application claims the priority of Chinese patent application No. 202110512113.X, filed with the China National Intellectual Property Administration on May 11, 2021 and entitled "Positioning Method and Apparatus". The entire contents of which are incorporated herein by reference.

### Technical Field

The present application relates to the field of communication technology, and in particular to a positioning method and apparatus.

### Background

The purpose of research on positioning enhancement technology in 5G New Radio (NR) access technology is to solve the location requirements of new business cases (including general business applications and industrial, Internet of Things, IoT applications). 3GPP has already conducted positioning research and standardization in NR wireless communication systems in Rel-16, and Rel-17 is conducting further research and standardization on positioning from the perspectives of higher accuracy, network and terminal performance.

The existing 3GPP R16 positioning protocol requires that a terminal must perform positioning measurements within the measurement gap (MG). In the R16 positioning protocol, the downlink positioning pilots of each base station (gNB)/Transmit and Receive Point (TRP) are sent periodically. Therefore, the downlink positioning reference signal can be made to fall within the measurement gap by properly configuring the measurement gap.

### Summary

Embodiments of the present application provide a positioning method and apparatus to ensure PRS measurement in the measurement gap.

On the LMF side, some embodiments of the present application provide a positioning method, including:
determining recommendation information of Positioning Reference Signal, PRS;
transmitting the recommendation information of PRS to control a PRS measurement to be performed in a Measurement Gap, MG.

According to this method, the recommended information of PRS is determined, and the recommended information of PRS is transmitted, to control the PRS measurement in the measurement gap, thereby ensuring that the PRS measurement is performed in the measurement gap.

In some embodiments, the transmitting the recommendation information of PRS, includes: transmitting the recommendation information of PRS to a base station.

In some embodiments, the method further includes: transmitting a PRS configuration to a terminal.

In some embodiments, the determining the recommendation information of PRS, includes:
determining the recommendation information of PRS according to the MG that has configured for a terminal;
   or
determining the recommendation information of PRS according to capability about whether a terminal supports a positioning measurement without the MG.

In some embodiments, the method further includes:
receiving the capability reported by the terminal or a base station, about whether the terminal supports a positioning measurement without the MG, in a case that the recommendation information of PRS is determined according to the capability about whether the terminal supports a positioning measurement without the MG.

In some embodiments, the method further includes: requesting the terminal or the base station to report the capability about whether the terminal supports the positioning measurement without the MG.

In some embodiments, the method further includes: requesting the terminal or a base station to report MG information.

In some embodiments, the method further includes:
receiving a PRS configuration transmitted by a base station, where the PRS configuration is determined by the base station based on the recommendation information of PRS; and
notifying a terminal of the PRS configuration transmitted by the base station.

In some embodiments, the method further includes:
receiving a PRS candidate configuration transmitted by a base station; where the recommendation information of PRS is determined based on the PRS candidate configuration.

In some embodiments, the method further includes:
transmitting the recommendation information of PRS to a terminal, the recommendation information of PRS is configured to perform a positioning measurement by a terminal.

In some embodiments, the recommendation information of PRS includes recommended MG information; the transmitting the recommendation information of PRS includes:
transmitting the recommended MG information to a serving base station of a terminal according to PRS configuration information of the terminal's serving cell and neighboring cells; or
transmitting the recommended MG information to the terminal before notifying a terminal of the PRS.

In some embodiments, the PRS is an on-demand PRS.

On the base station side, some embodiments of the present application provide a positioning method including:
receiving recommendation information of Positioning Reference Signal, PRS;
transmitting the PRS according to the recommendation information of PRS.

In some embodiments, before receiving the recommendation information of PRS, the method further includes:
receiving an information request from a Location Management Function, LMF, and transmitting one or a combination of the following information to the LMF according to the information request:
PRS candidate configuration;
PRS configuration;
Measurement Gap, MG, information;
capability about whether the terminal supports positioning measurement without the MG.

In some embodiments, the transmitting the MG information to the LMF includes:
notifying the LMF of the MG information of a terminal to be positioned before a serving cell initiates a positioning service request; or
notifying the LMF of the MG information of a terminal to be positioned in a case that a serving cell configures the PRS.

In some embodiments, the method further includes: requesting the terminal to report the MG information.

In some embodiments, the method further includes: receiving the capability about whether a terminal supports positioning measurement without the MG.

In some embodiments, the recommendation information of PRS is requested by the terminal or the base station.

On the terminal side, some embodiments of the present application provide a positioning method including:
receiving recommendation information of Positioning Reference Signal, PRS; and
receiving the PRS according to the recommendation information of PRS, and detecting the PRS.

In some embodiments, before receiving the recommendation information of PRS, the method further includes:
providing one or a combination of the following information to a network side:
PRS demand information;
Measurement Gap, MG, information;
capability about whether a terminal supports positioning measurement without the MG.

On the LMF side, some embodiments of the present application provide a positioning apparatus including:
a memory configured to store program instructions;
a processor configured to invoke the program instructions stored in the memory and execute following according to the program instructions:
   determining recommendation information of Positioning Reference Signal, PRS;
   transmitting the recommendation information of PRS to control PRS measurement to be performed in a Measurement Gap, MG.

In some embodiments, the processor transmits the recommendation information of PRS to a base station.

In some embodiments, the processor is further configured to invoke the program instructions stored in the memory and execute following according to the program instructions: transmitting a PRS configuration to a terminal.

In some embodiments, the processor determines the recommendation information of PRS according to the MG that has configured for the terminal, or determines the recommendation information of PRS according to capability about whether the terminal supports positioning measurement without the MG.

In some embodiments, in a case that the recommendation information of PRS is determined according to the capability about whether the terminal supports a positioning measurement without the MG, the processor is further configured to invoke the program instructions stored in the memory and execute following according to the program instructions: receiving the capability reported by the terminal or a base station, about whether the terminal supports a positioning measurement without the MG.

In some embodiments, the processor is further configured to invoke the program instructions stored in the memory and execute following according to the program instructions: requesting the terminal or the base station to report the capability about whether the terminal supports the positioning measurement without the MG.

In some embodiments, the processor is further configured to invoke the program instructions stored in the memory and execute following according to the program instructions: requesting the terminal or a base station to report MG information.

In some embodiments, the processor is further configured to invoke the program instructions stored in the memory and execute following according to the program instructions:
receiving a PRS configuration transmitted by a base station, wherein the PRS configuration is determined by the base station based on the recommendation information of PRS; and
notifying a terminal of the PRS configuration transmitted by the base station.

In some embodiments, the processor is further configured to invoke the program instructions stored in the memory and execute following according to the program instructions:
receiving a PRS candidate configuration transmitted by a base station; where the recommendation information of PRS is determined based on the PRS candidate configuration.

In some embodiments, the processor is further configured to invoke the program instructions stored in the memory and execute following according to the program instructions:
transmitting the recommendation information of PRS to a terminal, the recommendation information of PRS is configured to perform a positioning measurement by a terminal.

In some embodiments, the recommendation information of PRS includes recommended MG information; the transmitting the recommendation information of PRS, includes:
transmitting the recommended MG information to a serving base station of a terminal according to a configuration information of PRS of the terminal's serving cell and neighboring cells; or
transmitting the recommended MG information to the terminal before notifying a terminal of the PRS.

In some embodiments, the PRS is an on-demand PRS.

On the base station side, some embodiments of the present application provide a positioning apparatus including:
a memory configured to store program instructions;
a processor configured to invoke the program instructions stored in the memory and execute following according to the program instructions:
   receiving recommendation information of Positioning Reference Signal, PRS; and
   transmitting the PRS according to the recommendation information of PRS.

In some embodiments, before the receiving the recommendation information of PRS, the processor is further configured to invoke program instructions stored in the memory and execute following according to the program instructions:
receiving an information request from a Location Management Function, LMF, and transmitting one or a combination of the following information to the LMF according to the information request:
PRS candidate configuration;
PRS configuration;
Measurement Gap, MG, information;
capability about whether a terminal supports positioning measurement without the MG.

In some embodiments, the transmitting the MG to the LMF includes:
notifying the LMF of the MG information of a terminal to be positioned before a serving cell initiates a positioning service request; or
notifying the LMF of the MG information of a terminal to be positioned in response to a serving cell configuring the PRS.

In some embodiments, the processor is further configured to invoke program instructions stored in the memory and execute following according to the program instructions: requesting the terminal to report the MG information.

In some embodiments, the processor is further configured to invoke program instructions stored in the memory and execute following according to the program instructions: receiving capability reported by the terminal, about whether a terminal supports positioning measurement without the MG.

On the terminal side, some embodiments of the present application provide a positioning apparatus including:
a memory configured to store program instructions;
a processor configured to invoke the program instructions stored in the memory and execute following according to the program instructions:
   receiving recommendation information of Positioning Reference Signal, PRS; and
   receiving the PRS according to the recommendation information of PRS, and detecting the PRS.

In some embodiments, before receiving the recommendation information of PRS, the processor is further configured to invoke the program instructions stored in the memory and execute following according to the program instructions:
providing one or a combination of the following information to a network side:
PRS demand information;
Measurement Gap, MG information;
capability about whether a terminal supports positioning measurement without the MG.

On the LMF side, some embodiments of the present application provide another positioning apparatus including:
a determining unit configured to determine recommendation information of Positioning Reference Signal, PRS; and
a transmitting unit configured to transmit the recommendation information of PRS to control PRS measurement to be performed in a Measurement Gap, MG.

On the base station side, some embodiments of the present application provide another positioning apparatus including:
a receiving unit configured to receive recommendation information of Positioning Reference Signal, PRS; and
a transmitting unit configured to transmit a PRS according to the recommendation information of PRS.

On the terminal side, some embodiments of the present application provide another positioning apparatus including:
a receiving unit configured to receive recommendation information of Positioning Reference Signal, PRS; and
a detection unit configured to receive the PRS according to the recommendation information of PRS, and detect the PRS.

Some embodiments of the present application provide a computing device including a memory and a processor, the memory is configured to store program instructions; the processor is configured to invoke the program instructions stored in the memory and execute any method described above according to the program instructions.

Some embodiments of the present application provide a computer-readable storage medium, storing computer-executable instructions, and the computer-executable instructions are used to cause a computer to execute any method described above.

### Brief Description of Figures

In order to illustrate the technical solutions in embodiments of the present application more clearly, the drawings that need to be used in the description of the embodiments will be briefly introduced below. Obviously, the drawings in the following description are only part of embodiments of the present application. For those ordinary skilled in the art can also obtain other drawings based on these drawings without any creative effort.
Fig. 1 is a schematic flow chart of a positioning method provided in Embodiment 1 of the present application.
Fig. 2 is a schematic flow chart of a positioning method provided in Embodiment 2 of the present application.
Fig. 3 is a schematic flow chart of a positioning method on the LMF side provided by an embodiment of the present application.
Fig. 4 is a schematic flowchart of a positioning method on the base station side provided by an embodiment of the present application.
Fig. 5 is a schematic flowchart of a positioning method on the terminal side provided by an embodiment of the present application.
Fig. 6 is a schematic structural diagram of a positioning apparatus on the network side provided by an embodiment of the present application.
Fig. 7 is a schematic structural diagram of a positioning apparatus on the terminal side provided by an embodiment of the present application.
Fig. 8 is a schematic structural diagram of another positioning apparatus on the LMF side provided by an embodiment of the present application.
Fig. 9 is a schematic structural diagram of another positioning apparatus on the base station side provided by an embodiment of the present application.
Fig. 10 is a schematic structural diagram of another positioning apparatus on the terminal side provided by an embodiment of the present application.

### Detailed Description

In order to make the purpose, technical solutions and advantages of the present application clearer, the present application will be further described in detail below in conjunction with the accompanying drawings. Apparently, the described embodiments are only part but not all of the embodiments of the present application. Based on the embodiments in the present application, all other embodiments obtained by those ordinary skilled in the art without creative efforts fall within the protection scope of the present application.

In the 3GPP R16 positioning system, the Positioning Reference Signal (PRS) is transmitted periodically, rather than customized according to the positioning requirements of the terminal. When there is no positioning requirement on the terminal or network side, gNB/TRP will also transmit PRS. Therefore, it will cause a waste of PRS resources and cause interference to neighboring cells. For PRS that is transmitted periodically, when the terminal has positioning requirements, the terminal needs to wait until the scheduled PRS transmitting time to receive the PRS. The PRS transmission cycle directly affects the time delay of the positioning service.

Therefore, it is necessary to discuss the transmission of on-demand PRS, that is, the network side customizes PRS for the terminal according to the QoS of the positioning requirements. The on-demand PRS may only be transmitted aperiodically within a time period.

The on-demand PRS resources to be measured by the terminal may come from one or more gNB/TRP. According to the existing positioning architecture, one of the ways to support on-demand PRS is to notify the UE of the on-demand PRS resource configuration by the Location Management Function (LMF). However, according to existing protocol standards, the LMF does not know the UE measurement gap (MG) configuration. Therefore, the on-demand PRS provided by the LMF to the UE may not fall within the measurement gap configured for the UE.

Therefore, the positioning method and apparatus provided by embodiments of the present application focus on the notification and configuration of the measurement gap during the transmission implementation of on-demand PRS.

Here, the positioning method and the apparatus are based on the same invention concept. Since the principles of the positioning method and the apparatus to solve the problem are similar, the implementation of the apparatus and the positioning method can be referred to each other, and the repeated details will not be repeated.

The technical solutions provided by the embodiments of this application can be applied to a variety of systems, especially 5G systems. For example, applicable systems may be Global System of Mobile Communication (GSM) system, Code Division Multiple Access (CDMA) system, Wideband Code Division Multiple Access (WCDMA) General Packet Wireless Service (GPRS) system, Long Term Evolution (LTE) system, LTE Frequency Division Duplex (FDD) system, LTE Time Division Duplex (TDD), General Mobile system (Universal Mobile Telecommunication System, UMTS), Worldwide Interoperability for Microwave Access (WiMAX) system, 5G system and 5G NR system, etc. These various systems include terminal equipment and network equipment.

The terminal device involved in the embodiments of the present disclosure may be a device that provides voice and/or data connectivity to the terminal, a handheld device with a wireless connection function, or other processing devices connected to a wireless modem. In different systems, the names of terminal device may also be different. For example, in a 5G system, the terminal device may be called user equipment (UE). Wireless terminal devices may communicate with one or more core networks via the RAN. The wireless terminal devices may be mobile terminal devices, such as mobile phones (or "cellular" phones) and computers having mobile terminal devices, which may be, for example, portable, pocket-sized, handheld, computer-built-in or vehicle-mounted mobile devices that exchange voice and/or data with the wireless access network. For example, Personal Communication Service (PCS) phones, cordless phones, Session Initiated Protocol (SIP) phones, Wireless Local Loop (WLL) stations, Personal Digital Assistants, PDA) and other equipment. Wireless terminal equipment may also be called a system, a subscriber unit, a subscriber station, a mobile station, a mobile, a remote station, an access point, a remote terminal, an access terminal, a user terminal, a user agent, a user device, are not limited in the embodiments of this application.

The network device involved in the embodiments of this application may be a base station, and the base station may include multiple cells. Depending on the specific application, a base station can also be called an access point, or it can refer to a device in the access network that communicates with wireless terminal equipment through one or more sectors on the air interface, or other names. The network equipment may be used to convert received air frames to Internet Protocol (IP) packets and vice versa, and serve as a router between the wireless terminal equipment and the rest of the access network, which may include the Internet Protocol (IP) communication network. The network devices can also coordinate attribute management of the air interface. For example, the network equipment involved in the embodiments of the present application may be a network equipment (Base Transceiver Station, BTS) in the Global System for Mobile communications (GSM) or Code Division Multiple Access, CDMA, or it can be a network device (NodeB) in a Wide-band Code Division Multiple Access (WCDMA), or an evolutionary network device (evolutional node B, eNB or e-NodeB) in a Long Term Evolution (LTE) system, a 5G base station in the 5G network architecture (next generation system), or a home evolved node B (HeNB), a relay node, a home base station (femto), a pico base station (pico), etc., are not limited in the embodiments of this application.

Each embodiment of the present application will be described in detail below with reference to the accompanying drawings. It should be noted that the display order of the embodiments of this application only represents the order of the embodiments, and does not represent the quality of the technical solutions provided by the embodiments.

The embodiment of this application provides a corresponding measurement gap configuration method for on-demand PRS, including the following three solutions.

Solution 1: For the situation where the terminal has been configured with a periodic measurement gap (Measurement Gap, MG), the UE or the serving base station (serving gNB) informs the LMF of the relevant parameters of the UE measurement gap, so that the LMF can require each gNB to configure the PRS within the periodic MG period of the UE when the LMF requests PRS from each gNB (including the serving gNB and each neighboring base stations (neighboring gNBs)) for the terminal. In this way, the UE does not need to request a new MG. The LMF can request relevant parameters of the measurement gap from the UE or the serving base station, or the UE or the serving base station (serving gNB) actively informs the LMF of the relevant parameters of the UE measurement gap.

In the Solution 1, the LMF needs to request the gNB/UE to report the periodic MG, and recommends the PRS configuration based on the periodic MG configured by the terminal (so that the PRS is in the MG), and then notifies the UE of the PRS configuration provided by the gNB.

The characteristics of the Solution 1 are:
LMF recommends PRS configuration to each gNB based on the configured MG;
gNB configures PRS according to the LMF recommended PRS configuration; and
the LMF notifies the UE of the gNB's PRS configuration.

The standardization impact of this solution is:
1. the UE or gNB informs the LMF of the UE's measurement gap;
2. the LMF notifies the serving cell and/or neighboring cells of the on-demand PRS configuration interval.

Solution 2: The LMF determines the transmission time of on-demand PRS based on capability about whether the terminal supports a positioning measurement without measurement gap.

If the terminal supports positioning measurement without measurement gaps, the LMF recommends the optimal PRS configuration (for example, the minimum delay) to each gNB based on the terminal capabilities.

If the terminal does not support positioning measurement without measurement gaps, when the LMF requests on-demand PRS from each gNB (including serving gNB and neighboring gNBs) for the terminal, it should reserve the MG reconfiguration time between the moment of notifying the terminal of on-demand PRS and the moment of UE detecting PRS moments. Therefore, after the UE receives the on-demand PRS configuration information, if necessary (that is, if the on-demand PRS does not fall in the allocated MG), it can request the base station to configure the MG or update the MG, and the serving cell will reconfigure the measurement gap according to the UE's request. Compared with the Solution 1, the delay of the Solution 2 is reduced.

The characteristics of the Solution 2 are:
LMF recommends the optimal PRS configuration to each gNB based on UE capabilities;
the UE applies for MG configuration and reconfiguration according to the on-demand PRS transmission time period; and
the LMF should reserve time for MG reconfiguration from the time when the LMF notifies the terminal of on-demand PRS to the time when the UE detects the PRS.

The standardization impact of this solution is:
the terminal reports whether it supports positioning measurement without measurement gaps; and
the LMF notifies the terminal of the transmission time of on-demand PRS.

Solution 3: The LMF requires or notifies the serving base station through the UE to reconfigure the MG. When configuring on-demand PRS, the serving cell and neighboring cells notify LMF of the candidate or on-demand PRS information which is actually transmitted. The LMF recommends MG information based on the on-demand PRS configuration information of the serving cell and neighboring cells. Then the LMF transmits the recommended MG information to the serving cell, or the LMF notifies the UE of the MG before notifying the UE of on-demand PRS, so that the UE obtains the reconfigured MG before detecting on-demand PRS. The delay of this solution is small and the number of signaling interactions used to update the measurement gap is small.

The characteristics of this solution are as follows (discuss the characteristics of Solution 3 based on different implementation solutions of on-demand PRS):
Solution 3-1:
Step 1: the serving gNB and neighboring gNBs report the candidate PRS resource pool to the LMF;
Step 2: the LMF determines PRS recommendation information based on the candidate PRS resource pool; the recommendation information of the PRS includes one or a combination of the following:
   on-demand PRS or a start time of the MG corresponding to the on-demand PRS;
   on-demand PRS or a suspension time of the MG corresponding to the on-demand PRS;
   on-demand PRS or a duration of the MG corresponding to the on-demand PRS;
   on-demand PRS or a period of the MG corresponding to the on-demand PRS;
   a testing opportunity of on-demand PRS;
   a repetition quantity of the MG corresponding to on-demand PRS; or
   a time slot including on-demand PRS.

The PRS recommendation information is requested by the user or the base station.

Step 3: the LMF transmits the recommended PRS or PRS parameters to the serving gNB and neighboring gNBs, and recommends the optimal MG configuration to the serving cell at the same time.

Here, if the LMF transmits the recommended PRS parameters to the serving gNB and the neighboring gNBs, the serving gNB and the neighboring gNBs transmit a response to on-demand PRS request to the LMF to determine the on-demand PRS configuration.

Step 4: the serving cell performs MG reconfiguration based on the recommended MG.

The standardization impact of this solution is: the first three steps mentioned above all have an impact on standardization.

### Solution 3-2:

Step 1: LMF notifies each base station of the expected on-demand PRS parameters according to the UE's positioning requirements, that is, the PRS recommendation information.

These on-demand PRS parameters contain one or a combination of:
on-demand PRS or a start time of the measurement gap corresponding to the on-demand PRS;
on-demand PRS or a suspension time of the measurement gap corresponding to the on-demand PRS;
on-demand PRS or a duration of the measurement gap corresponding to the on-demand PRS;
on-demand PRS or a period of the measurement gap corresponding to the on-demand PRS;
a testing opportunity of on-demand PRS;
on-demand PRS or a repetition quantity of the MG corresponding to the on-demand PRS;
a time slot comprising on-demand PRS.

The serving cell can determine the time information of the MG and the frequency of the MG based on the start and end time of on-demand PRS transmission and the frequency of on-demand PRS transmission.

Step 2: The serving cell and neighboring cells configure on-demand PRS according to the expected on-demand PRS parameters, and notify the LMF of the configured on-demand PRS.

Step 3: The LMF notifies the UE of the on-demand PRS that needs to be measured based on these configured on-demand PRS. These PRS that need to be measured are the PRS that are actually transmitted.

The LMF can notify the serving cell of the MG configuration in this step.

Step 4: When the actually transmitted PRS is different from the configured on-demand PRS notified by the base station, the LMF should notify the base station of the PRS which is measured by finally notifying the UE, so that other resources which are not used to measure the PRS by the UE will be used for other transmissions.

The standardization impact of this solution is: the above four steps all have an impact on standardization.

The following table compares the features of these three solutions:

| | Characteristics | Delay |
|---|---|---|
| Solution 1 | LMF recommends PRS configuration to each gNB according to configured MG; the gNB configures PRS according to the PRS configuration recommended by the LMF; the LMF notifies the UE of the PRS configuration. | High |
| Solution 2 | LMF recommends the optimal PRS configuration to each gNB according to the UE capabilities; the UE requests the MG configuration and reconfiguration according to the transmission period of on-demand PRS; the MG reconfiguration time should be reserved between the moment of notifying of on-demand PRS by the LMF and the moment of UE detecting PRS moments. | Medium |
| Solution 3 | LMF notifies the gNB/UE of the expected MG, including: | Low |
| | 1. LMF notifies the gNB of recommended MG information when the LMF transmits a request for on-demand PRS information to the serving gNB; the LMF notifies neighboring cells of on-demand PRS configuration interval; the serving cell and neighboring cells configure the on-demand PRS in the recommended MG; | |
| | or | |
| | 2. each base station notifies the LMF of candidate pool of on-demand PRS, the LMF determines PRS which is transmitted actually from the candidate pool, and determines the recommended MG according to the PRS which is transmitted actually, and notifies the gNB of the recommended MG; | |
| | or | |
| | 3. The LMF notifies the UE of the recommended MG as soon as the recommended MG being determined so that the UE can request an update for MG as early as possible. | |

Among the above solutions, which solution to adopt can be indicated through high-level signaling or agreed upon in a protocol. The high-level signaling here may be, for example, the base station instructing the UE which solution to adopt through RRC signaling. The following descriptions are based on one side and the implementation process.

Description will be introduced according to a LMF side, a base station side and a UE side.

The execution process on the LMF side specifically includes:
Step 1: LMF transmits a request for on-demand PRS related information to each base station or terminal.

The request specifically includes one or a combination of the following:
on-demand PRS candidate configuration request;
on-demand PRS configuration request;
MG information; or
terminal capability configured to indicate whether the terminal supports a positioning measurement without measurement gaps.

The on-demand PRS configuration request includes: an on-demand PRS configuration time period, that is, an on-demand PRS information.

The on-demand PRS candidate configuration request is a request to provide a configuration time period (ie, a resource pool of the time period) for the candidate on-demand PRS.

The characteristic of this step is that the LMF transmits an information request to each base station and transmits a MG. The on-demand PRS of each base station should fall in the MG. This processing corresponds to the Solution 1.

Step 1 may include, for example: the LMF requests the terminal or the base station to report capability whether the terminal supports positioning measurement without measurement gap;
Step 1 may further include: the LMF requests the terminal or the base station to report the measurement gap information. Here, the terminal can directly report the measurement gap information to the LMF, or can also report the measurement gap information to the LMF through the base station;
Step 2: LMF receives the first related information of on-demand PRS notified by the serving cell and/or UE.

The first related information of on-demand PRS includes one or a combination of the following:
on-demand PRS candidate configuration;
on-demand PRS configuration;
MG information; or
terminal capability.

For example, the Step 2 may include:
the LMF receives capability about whether the terminal supports positioning measurement without measurement gap; the capability is reported by the terminal or the base station.

Step 2 may also include: the LMF receives the on-demand PRS candidate configuration transmitted by the base station. In subsequent steps, on-demand PRS recommendation information may be determined based on the on-demand PRS candidate configuration.

The characteristics of this step are:
the gNB notifies the LMF of a time position of the MG, specifically including (corresponding to Solution 1):
the serving cell notifies the LMF of the MG information of the terminal to be positioned before requesting the positioning service; or
the serving cell notifies the LMF of the time of MG of the terminal, when the serving cell configures the on-demand PRS.

Alternatively, the UE notifies the LMF of the time position of the MG, specifically including:
the UE notifies the time position of the MG when the UE reports the capability (Solution 2), and/or notifies whether the terminal supports positioning measurement without measurement gap (Solution 1).

The gNB/UE notifies the LMF of the time position of the MG, specifically including (corresponding to Solution 1): the LMF notifies the neighboring cell of the expected time position of on-demand PRS, and the expected time is within the MG. This can reduce signaling notification time.

Step 3: LMF notifies the terminal/serving cell of the second related information of on-demand PRS.

The second related information of on-demand PRS includes: on-demand PRS configuration, at least one of MGs.

For example, Step 3 may specifically include:
determining on-demand PRS recommendation information and transmitting the on-demand PRS recommendation information to the base station and/or terminal to control PRS measurement in the measurement gap.

Further, Step 3 may also include: transmitting an on-demand PRS configuration to the terminal, where the on-demand PRS configuration may be an on-demand PRS configuration transmitted by the base station, and the on-demand PRS configuration is determined by the base station according to the recommendation information of on-demand PRS.

In some embodiments, the LMF may determine the recommendation information of the on-demand PRS according to the measurement gap that has been configured by the terminal; or
the LMF determines the recommendation information of the on-demand PRS according to the capability whether the terminal supports positioning measurement without measurement gap.

In addition, the on-demand PRS recommendation information may also be determined based on the on-demand PRS candidate configuration.

The on-demand PRS recommendation information, for example, includes recommended measurement gap configuration information; the LMF transmits the on-demand PRS recommendation information to the terminal, specifically including:
transmitting, by the LMF, recommended measurement gap configuration information to the serving base station of the terminal based on the on-demand PRS configuration information of serving cell and neighboring cells of the terminal; or
transmitting, by the LMF, the recommended measurement gap configuration information to the terminal before notifying the terminal of on-demand PRS.

Specifically, for example:
a) If the terminal does not support positioning measurement without measurement gap, the time should be reserved for MG reconfiguration between the time when the LMF notifies on-demand PRS and the time when the UE detects the PRS. After receiving the on-demand PRS configuration information, the UE requests the base station to update the MG, and the serving cell reconfigures the measurement gap according to the UE's request. According to high-level evaluation, the time required for periodic MG configuration is 13ms to 13.5ms. This solution is suitable for situations with high delays. This paragraph corresponds to the Solution 2;
   or,
b) LMF notifies the base station or UE of the relevant information of reconfiguring the MG. The LMF determines the MG recommendation information based on the on-demand PRS configuration information of the serving cell and/or neighboring cells, and then the LMF transmits the MG recommendation information to the serving cell, or the LMF transmits the MG information to the UE.

The LMF transmitting the MG information to the serving cell, includes: when the LMF transmits an Observed Time Difference of Arrival (OTDOA) information request to the serving cell, the LMF notifies the time information of the reconfigured MG. Alternatively, when the LMF transmits an on-demand PRS request to the serving cell or notifies that on-demand PRS is transmitted, the LMF notifies the serving gNB of the time position of the measurement gap in an explicit or implicit manner.

The LMF transmitting the MG information to the UE, includes: when the LMF transmits the UE capability request or assistance data to the UE, the LMF notifies the UE of the time position of the measurement gap.

Alternatively, the LMF transmitting the MG information to the UE, includes: the LMF transmits a measurement gap to the UE before transmitting on-demand PRS information to the terminal. The UE can configure the measurement gap in advance to reduce the delay since the UE obtains the measurement gap in advance.

The execution process on the serving cell side (i.e., the base station side) includes:
Step 1: the serving cell receives an information request from the LMF, the information request is configured to obtain one or a combination of the following information:
   on-demand PRS candidate configuration;
   on-demand PRS configuration;
   MG information; or
   capability about whether the terminal supports positioning measurement without measurement gap.
Step 2: The serving cell notifies the LMF of the first relevant information of on-demand PRS.

In some embodiments, the first related information of on-demand PRS includes at least one of: on-demand PRS candidate configuration, on-demand PRS configuration, MG information, or terminal capability.

The gNB notifying the LMF of the time position of the MG (i.e., MG information), includes: the serving cell notifies the LMF of the MG information of the terminal to be positioned before requesting the positioning service; or the serving cell notifies the LMF of the position of the MG of the terminal MG when the serving cell configures on-demand PRS.

The gNB notifying the LMF of the time position of the MG also includes: the LMF notifies the neighboring cells of the expected time position of the on-demand PRS; the expected time position is within the MG.

Step 3: the second related information of on-demand PRS notified by LMF is received.

The second related information of on-demand PRS includes on-demand PRS recommendation information determined by the LMF.

The recommendation information of on-demand PRS includes recommended measurement gap information, i.e., the time position of the MG.

The second related information of on-demand PRS may also include: on-demand PRS configuration.

In some embodiments, the LMF notifies the base station of time information for reconfiguring the MG. The LMF determines the MG recommendation information based on the on-demand PRS configuration information of the serving cell and/or neighboring cells. Therefore, the serving cell receives the MG recommendation information transmitted by the LMF.

The serving cell receives the MG recommendation information transmitted by the LMF. For example, the serving cell receives the OTDOA information request transmitted by the LMF, and obtains the MG recommendation information from the OTDOA information request, that is, the time information for reconfiguring the MG. Alternatively, the serving cell receives the on-demand PRS request transmitted by the LMF or the notification of the on-demand PRS transmitted, and the serving gNB learns the time position of the measurement gap in an explicit or implicit manner.

Step 4: The serving cell transmits on-demand PRS.

The execution process on the UE side includes the following steps.

Step 1: The UE provides the demand information of on-demand PRS to the LMF.

The demand information of on-demand PRS includes at least one of: on-demand PRS demand information, MG, or terminal capability.

The UE providing the demand information of on-demand PRS to the LMF, includes: the UE provides the demand information of on-demand PRS to the LMF based on information request of LMF.

The UE notifying the LMF of the time position of the MG, includes: the UE notifies the LMF of the time position of MG and/or whether the terminal supports positioning measurement without measurement gap, when the UE reports the capability.

The UE notifying the LMF of the time position of the MG further includes: the LMF notifies the neighboring cells of the expected time position of the on-demand PRS. The expected time position is within the MG. This can reduce the notification time of signaling.

Step 2: the second related information of on-demand PRS notified by LMF is received.

The second related information of on-demand PRS includes at least one of on-demand PRS configuration, or MG.

The LMF notifies the UE of the time information for reconfiguring the MG. The LMF determines the MG configuration information based on the on-demand PRS configuration information of the serving cell and/or neighboring cells, and then the LMF transmits the MG information to the serving cell, or the LMF transmits the MG information to the UE.

The LMF transmitting the MG information to the serving cell, further includes: the serving cell notifies the UE of the MG information.

The LMF transmitting the MG information to the UE includes: when the LMF transmits the UE capability request to the UE, the LMF notifies the UE of the time position of the measurement gap.

Step 3: The UE receives on-demand PRS and detects the on-demand PRS.

The following describes the overall process:
Solution 1: before the LMF determines the PRS, the periodic MG notified by the UE/gNB is obtained, so that the LMF determines the PRS resource in the MG. For the situation where the terminal has been configured with periodic MG, when the LMF determines the PRS for the terminal, a PRS configuration delay is reserved, so that the PRS can be configured during the periodic MG period. In this way, the UE does not need to request a new MG, but the PRS needs to be configured according to the periodic MG.

The gNB notifies LMF of the time position of MG.

One implementation scheme (Option 1): the serving cell notifies the LMF of the MG information of the terminal to be positioned before requesting the positioning service.

Another implementation scheme (Option 2): when the serving cell configures on-demand PRS, the serving cell notifies the LMF of the time of the terminal MG, and the LMF then notifies the neighboring cells of the expected time position of the on-demand PRS, the expected time position is within the MG.

The UE notifies the LMF of the time position of the MG.

The UE notifies the time position of the MG when the UE reports the capability, and the LMF notifies the neighbor cells of the expected time position of on-demand PRS, the expected time position is within the MG.

Solution 2: When LMF reserves the terminal for PRS configuration based on the terminal capability:
if the terminal supports positioning measurement without measurement gap, the LMF determines the low-delay PRS for the terminal without considering the measurement gap;
if the terminal does not support positioning measurement without measurement gaps and the terminal needs to configure periodic/aperiodic MG, when the LMF determines the PRS for the terminal, the LMF needs to reserve time for the terminal to perform MG request and MG configuration. According to high-level evaluation, the configuration time of periodic MG is 13ms to 13.5ms. This solution is suitable for situations with high delays.

Solution 3: LMF notifies the base station or UE of the time information for reconfiguring the MG.

For example, when the serving cell and neighboring cells configure on-demand PRS, the on-demand PRS information is notified to LMF. The LMF determines the MG configuration information based on the on-demand PRS configuration information of the serving cell and neighboring cells. Then the LMF transmits the MG configuration information to the serving cell in an explicit or implicit manner, and then the serving cell notifies the UE of the MG configuration information to, or the LMF transmits the MG configuration information to the UE. The implicit manner here means that the LMF notifies the base station of the on-demand PRS configuration, and the base station infers the measurement gap based on the on-demand PRS.

The gNB is notified as following:
Option 1: when LMF transmits OTDOA information request to the serving cell, the LMF notifies the time information for reconfiguring MG;
Option 2: when LMF transmits an on-demand PRS request to the serving cell or notifies that on-demand PRS is transmitted, the LMF notifies the serving gNB of the time position of the measurement gap in an explicit or implicit manner.

The UE is notified as following:
Option 1: when LMF transmits a UE capability request to the UE, the LMF notifies the UE of the time position of the measurement gap.

Specific descriptions of several embodiments are given below.

### Embodiment 1 (corresponding to Solution 2)

LMF recommends the optimal PRS configuration to each gNB based on the UE capability. The UE applies for MG configuration and reconfiguration according to the on-demand PRS transmission time period. Time should be reserved for MG reconfiguration between the time when the LMF notifies on-demand PRS and the time when the UE detects the PRS. This solution determines the transmission time of on-demand PRS based on the terminal capability, thereby adaptively adjusting the delay size based on the terminal capability.

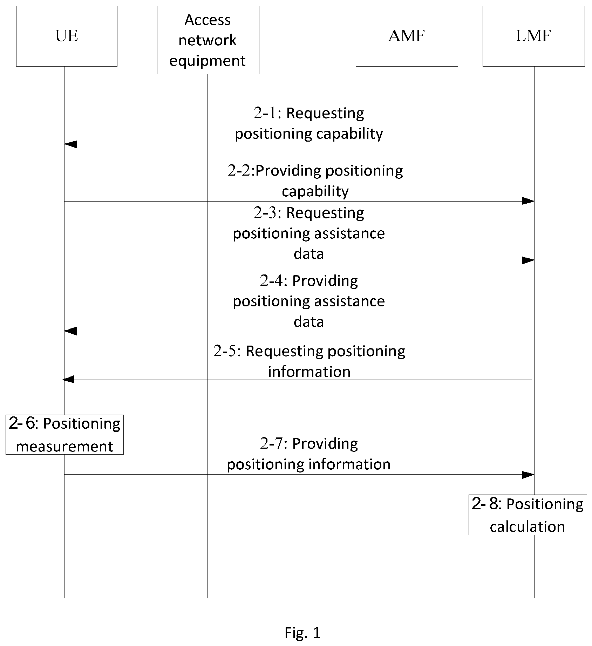

The implementation process of this embodiment is explained with reference to Fig. 1.

Step 2-1: The LMF requests a positioning capability from the UE and receives the terminal capability notified by the UE.

The LMF determines on-demand PRS resources based on whether the terminal supports positioning measurement without measurement gap. If the terminal does not support positioning measurement without measurement gap, the time for MG configuration should be reserved between the transmission time of the on-demand PRS determined by the LMF and the time when the terminal receives the on-demand PRS.

Step 2-2: The UE provides the positioning capability to the LMF.

Step 2-3: The UE requests positioning assistance data from the LMF.

Step 2-4: The LMF provides the positioning assistance data to the UE, that is, notifies the UE of the on-demand PRS configuration.

Step 2-5: The LMF requests positioning information from the UE.

Step 2-6: The UE performs positioning measurement and determines the positioning information.

Step 2-7: The UE provides positioning information to the LMF.

Step 2-8: The LMF performs positioning calculation based on the positioning information provided by the UE.

### Embodiment 2 (corresponding to Solution 1)

In this embodiment, the LMF recommends the PRS configuration to each gNB according to the configured MG, then the gNB configures the PRS according to the PRS configuration recommended by the LMF. Further, the LMF notifies the UE of the PRS configuration. In order to make the on-demand PRS configuration request, the gNB or UE needs to report MG related information to the LMF. This solution uses existing MGs and does not require MG reconfiguration.

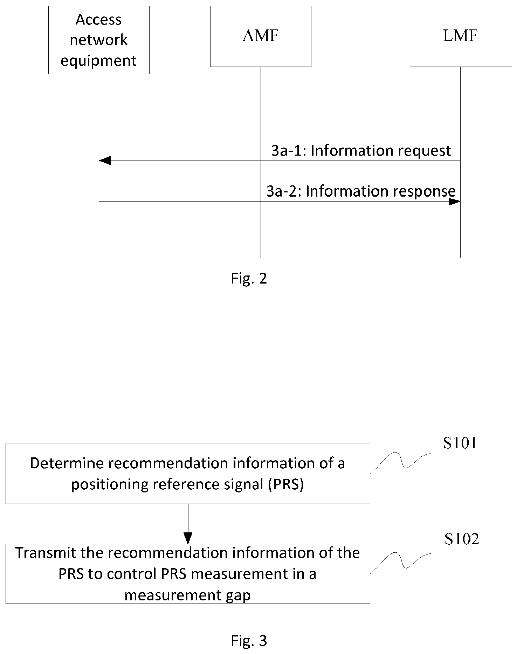

The implementation process of this embodiment is explained with reference to Fig. 2. The specific process includes:
Step 3a-1: The LMF transmits an information request to the base station, which includes requesting the base station to report the MG information of the UE;
Step 3a-2: The LMF receives the information response from the base station and obtains the MG information of the UE reported by the base station. The LMF notifies the UE of the on-demand PRS configuration. This on-demand PRS falls within the MG in Step 1.

### Embodiment 3 (corresponding to Solution 3)

In this embodiment, each base station notifies the LMF of the candidate resource pool of on-demand PRS, from which the LMF determines the actually transmitted PRS, determines the recommended MG based on the actually transmitted PRS, and notifies the gNB of the recommended MG.

The specific process of this embodiment includes:
LMF transmits information requests to each base station;
LMF receives the information response transmitted by each base station and obtains the candidate on-demand PRS configuration information (i.e., the candidate resource pool of on-demand PRS);
the base station includes a serving cell and a base station of a neighboring cell.

The LMF determines the on-demand PRSs that the UE needs to measure from these candidate on-demand PRSs, determines the recommended MG based on the union of the transmission times of these on-demand PRSs, notifies each base station of these on-demand PRSs, and notifies the serving cell of the recommended MG.

The base station receives the on-demand PRSs that the UE needs to measure and recommended MG transmitted by the LMF, reconfigures the measurement gap based on these on-demand PRS, and notifies the UE of the reconfigured content.

In this embodiment, after the LMF determines the actually transmitted on-demand PRS, the LMF notifies the base station of the actually transmitted on-demand PRS and at the same time notifies the recommended MG so as to use the necessary signaling in on-demand PRS without additional signaling interaction to notify the base station of the recommended MG in time.

### Embodiment 4 (corresponding to Solution 3)

In this embodiment, when LMF transmits an on-demand PRS information request to the serving gNB, the LMF notifies the gNB of the recommended MG information, and notifies the neighboring cells of the on-demand PRS configuration interval. The serving cell and neighboring cells configure the on-demand PRS in the recommended MG.

The LMF implementation process in this embodiment includes:
Step 1: the LMF transmits an on-demand PRS information request to each base station and transmits the MG. The on-demand PRS of each base station should fall in the MG.

Here, the on-demand PRS information request includes the configuration time period of on-demand PRS.

Step 2: The LMF receives the on-demand PRS transmitted by each base station and notifies the UE of these on-demand PRS.

The process on base station side of the serving cell includes:
Step 1: The base station receives the measurement gap transmitted by the LMF;
Step 2: The base station performs on-demand PRS configuration according to the measurement gap transmitted by the LMF, reconfigures the measurement gap, and notifies the UE of the reconfigured content. The on-demand PRS should be within the measurement gap.

In this solution, LMF needs to determine the transmitting time period of on-demand PRS based on positioning requirements. The LMF needs to notify each cell of the on-demand PRS transmitting time period. When the LMF notifies the serving cell of the on-demand PRS transmitting time period, the LMF explicitly notifies the serving cell of the MG. Alternatively, according to a protocol, the MG can be calculated from the on-demand PRS transmitting time period of each notified cell. This solution uses the necessary signaling in on-demand PRS to promptly notify the base station of the recommended MG without additional signaling interaction.

### Embodiment 5 (corresponding to Solution 3)

In this embodiment, once the LMF determines the recommended MG, the LMF notifies the UE so that the UE can apply for MG update as early as possible.

The process on the LMF side of this embodiment:
Step 1: before notifying the UE of on-demand PRS resources, the LMF notifies the UE of the measurement gap;
Step 2: the LMF transmits on-demand PRS to the UE and notifies the UE of the configuration of these on-demand PRS (i.e., the time position of the on-demand PRS resource).

The process on UE side:
Step 1: the UE receives the measurement gap transmitted by the LMF and transmits a measurement gap reconfiguration request to the base station;
Step 2: the UE receives the on-demand PRS configuration notified by the LMF.

After the terminal obtains the on-demand PRS, the terminal initiates an MG update request to the serving cell according to the time position of the on-demand PRS resource, and then waits for the MG configuration of the base station. In the embodiment of this application, when the LMF determines the recommended MG, the LMF will transmit the recommended MG to the terminal before transmitting the on-demand PRS configuration to the terminal, such as when requesting positioning capability, thereby reducing the delay.

In summary, the embodiments of the present application provide on-demand PRS transmission implementation process, ensuring that PRS can be measured in the measurement gap, include:
the base station/UE reports to the LMF whether the UE supports positioning measurement without measurement gap. Based on this capability, the LMF determines the configured on-demand PRS transmission time and notifying the UE of the time interval between adjacent on-demand PRSs.

Before the LMF notifies the UE of on-demand PRS, the base station/UE notifies the LMF of the UE's measurement gap. The LMF determines the expected time period of the on-demand PRS and notifies the neighboring cells of the time period, so that the PRS configured in each cell is within the measurement gap.

The LMF determines the on-demand PRS based on the candidate PRS, and notifies the serving cell base station of the measurement gap, and the serving cell base station reconfigures the measurement.

The LMF notifies the serving cell of the measurement gap, the serving cell configures the PRS in the measurement gap, and notifies that the on-demand PRS configured by the neighboring cell is also in the measurement gap.

The LMF notifies the UE of the measurement gap before notifying the UE of the on-demand PRS resources. The UE obtains the measurement gap in advance and can configure the measurement gap in advance to reduce the delay.

Therefore, the embodiments of this application provide a method to ensure that PRS can be measured in the measurement gap under on-demand PRS. According to different application scenarios, it can achieve a measurement gap configuration corresponding to on-demand PRS, or a low-latency measurement gap configuration corresponding to on-demand PRS, with minimal impact on existing standards.

Referring to Fig. 3, on the LMF side, a positioning method provided by embodiments of the present application includes:
S101: determining the recommendation information of Positioning Reference Signal, PRS; and
S102: transmitting the recommendation information of PRS to control PRS measurement to be performed in the measurement gap.

Through this method, the recommendation information of PRS is determined, and the recommendation information of PRS is transmitted to control the PRS measurement in the measurement gap, thereby ensuring that the PRS measurement is performed in the measurement gap.

In some embodiments, the recommendation information of PRS is transmitted to the base station.

In some embodiments, the method further includes: transmitting the PRS configuration to the terminal.

In some embodiments, determining the recommendation information of the PRS according to the measurement gap that has been configured by the terminal, or determining the recommendation information of PRS according to the capability about whether the terminal supports the positioning measurement without measurement gap.

In some embodiments, when determining the PRS recommendation information based on the capability about whether the terminal supports the positioning measurement without measurement gap, the method further includes: receiving the capability reported by the terminal or the base station, about whether the terminal supports the positioning measurement without measurement gap.

In some embodiments, the method further includes: requesting the terminal or the base station to report the capability about whether the terminal supports positioning measurement without measurement gap.

In some embodiments, the method further includes: requesting the terminal or the base station to report the measurement gap information.

In some embodiments, the method further includes:
receiving the PRS configuration transmitted by the base station, where the PRS configuration is determined by the base station based on the recommendation information of PRS; and
notifying the terminal of the PRS configuration transmitted by the base station.

In some embodiments, the method further includes:
receiving the PRS candidate configuration transmitted by the base station, and the recommendation information of PRS is determined based on the PRS candidate configuration.

In some embodiments, the method further includes:
transmitting the recommendation information of PRS to the terminal, the recommendation information of PRS is configured to perform a positioning measurement by a terminal.

In some embodiments, the recommendation information of PRS includes recommended measurement gap information; the transmitting the recommendation information of PRS, includes:
transmitting the recommended measurement gap information to the serving base station of the terminal according to the PRS configuration information of the terminal's serving cell and neighboring cells; or
transmitting the recommended measurement gap information to the terminal before notifying the terminal of the PRS.

In some embodiments, the PRS is an on-demand PRS.

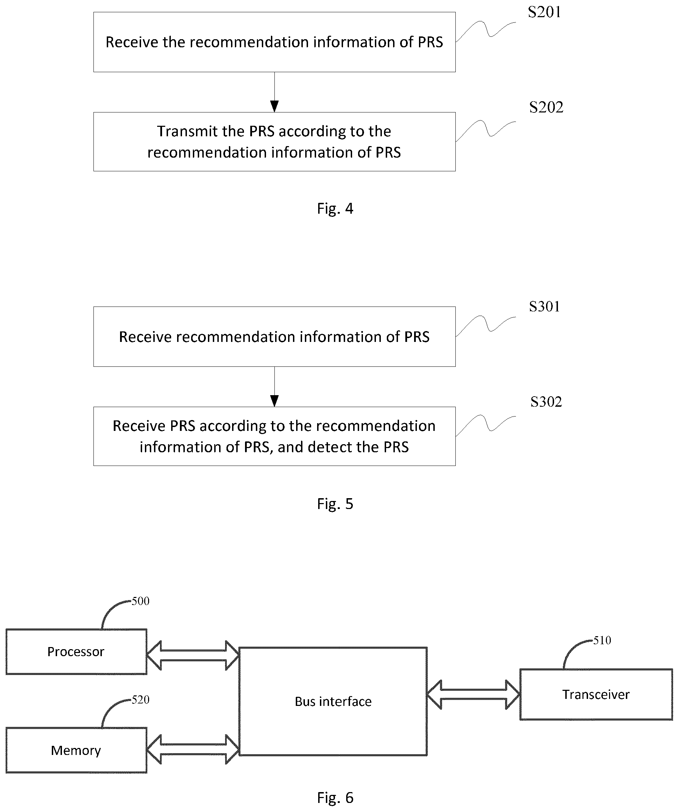

On the base station side, referring to Fig. 4, a positioning method provided by an embodiment of the present application includes:
S201: receiving the recommendation information of the PRS; and
S202: transmitting the PRS according to the recommendation information of the PRS.

In some embodiments, before receiving the recommendation information of the PRS, the method further includes:
receiving an information request from a LMF, and transmitting one or a combination of the following information to the LMF according to the information request:
PRS candidate configuration;
PRS configuration;
Measurement Gap, MG information; or
capability about whether the terminal supports positioning measurement without measurement gap.

In some embodiments, the transmitting the MG information to the LMF, includes:
notifying the LMF of the MG information of the terminal to be positioned before the serving cell initiates a positioning service request; or
when the serving cell configures the PRS, notifying the LMF of the MG information of the terminal to be positioned.

In some embodiments, the method further includes: requesting the terminal to report MG information.

In some embodiments, the method further includes:
receiving capability reported by the terminal as to whether the terminal supports positioning measurement without measurement gap.

In some embodiments, the PRS recommendation information is requested by the terminal or the base station.

On the terminal side, referring to Fig. 5, a positioning method provided by an embodiment of the present application includes:
S301: receiving the recommendation information of the PRS; and
S302: receiving the PRS according to the recommendation information of the PRS, and detecting the PRS.

In some embodiments, before receiving the PRS recommendation information, the method further includes:
providing one or a combination of the following information to the network side:
PRS demand information;
MG information;
capability about whether a terminal supports positioning measurement without a MG.

Referring to Fig. 6, on the network side, an embodiment of the present application provides a positioning apparatus, including: a memory 520, a processor 500, a transceiver 510, and etc.

When the network side positioning apparatus serves as the LMF side device:
the memory 520 is configured to store program instructions;
the processor 500 is configured to invoke the program instructions stored in the memory and execute following according to the obtained program:
   determining recommendation information for Positioning Reference Signal PRS; and
   transmitting the recommendation information to control PRS measurement in the measurement gap.

In some embodiments, the processor 500 transmits the recommendation information of PRS to the base station.

In some embodiments, the processor 500 is further configured to invoke program instructions stored in the memory, and execute following according to the obtained program: transmitting the PRS configuration to the terminal.

In some embodiments, the processor 500 determines the recommendation information of the PRS according to the measurement gap that has been configured by the terminal; or the processor 500 determines the recommendation information of the PRS according to the capability about whether the terminal supports positioning measurement without measurement gap.

In some embodiments, when determining the recommendation information of the PRS based on the capability about whether the terminal supports positioning measurement without measurement gap, the processor 500 is further configured to invoke program instructions stored in the memory and execute following according to the obtained program: receiving the capability reported by the terminal or the base station about, whether the terminal supports positioning measurement without measurement gap.

In some embodiments, the processor 500 is further configured to invoke program instructions stored in the memory, and execute following according to the obtained program: requesting the terminal or base station to report the capability about whether the terminal supports the positioning measurement without the MG.

In some embodiments, the processor 500 is further configured to invoke program instructions stored in the memory, and execute following according to the obtained program: requesting the terminal or the base station to report the measurement gap information.

In some embodiments, the processor 500 is further configured to invoke program instructions stored in the memory and execute following according to the obtained program:
receiving the PRS configuration transmitted by the base station, where the PRS configuration is determined by the base station based on the recommendation information of the PRS; and
notifying the terminal of the PRS configuration transmitted by the base station.

In some embodiments, the processor 500 is further configured to invoke program instructions stored in the memory and execute following according to the obtained program:
receiving the PRS candidate configuration transmitted by the base station, and the recommendation information of PRS is determined based on the PRS candidate configuration.

In some embodiments, the processor 500 is further configured to invoke program instructions stored in the memory and execute following according to the obtained program:
transmitting the recommendation information of PRS to the terminal, the recommendation information of PRS is configured to perform a positioning measurement by a terminal.

In some embodiments, the recommendation information of PRS includes recommended measurement gap information; the transmitting the recommendation information of PRS, includes:
transmitting recommended measurement gap information to the serving base station of the terminal according to the configuration information of the PRS of the terminal's serving cell and neighboring cells; or
transmitting the recommended measurement gap information to the terminal before notifying the terminal of the PRS.

In some embodiments, the PRS is an on-demand PRS.

When the network side positioning apparatus serves as a base station side device:
the processor 500 is configured to invoke the program instructions stored in the memory and execute following according to the obtained program:
receiving recommendation information of PRS; and
transmitting the PRS according to the recommendation information of PRS.

In some embodiments, before receiving the recommendation information of PRS, the processor 500 is further configured to invoke program instructions stored in the memory and execute following according to the obtained program:
receiving an information request from the LMF, and transmitting one or a combination of the following information to the LMF according to the information request:
PRS candidate configuration;
PRS configuration;
Measurement Gap, MG, information;
capability about whether the terminal supports positioning measurement without measurement gap.

In some embodiments, the transmitting the MG to the LMF includes:
notifying the LMF of the MG information of the terminal to be positioned before the serving cell initiates a positioning service request; or
notifying the LMF of the MG information of the terminal to be positioned when the serving cell configures the PRS.

In some embodiments, the processor 500 is further configured to invoke program instructions stored in the memory, and execute following according to the obtained program: requesting the terminal to report the MG information.

In some embodiments, the processor 500 is further configured to invoke program instructions stored in the memory and execute following according to the obtained program:
receiving capability reported by the terminal as to whether the terminal supports positioning measurement without measurement gap.

In some embodiments, the recommendation information of PRS is requested by the terminal or the base station.

The transceiver 510 is configured to receive and transmit data under the control of processor 500.

In FIG. 6, the bus architecture may include any number of interconnected buses and bridges, specifically one or more processors represented by processor 500 and various circuits of the memory represented by memory 520 are linked together. The bus architecture can also link together various other circuits such as peripherals, voltage regulators, and power management circuits, which are all well known in the art and therefore will not be described further herein. The bus interface provides the interface. Transceiver 510 may be a plurality of elements, including a transmitter and a receiver, providing a unit for communicating with various other devices over a transmission medium. The processor 500 is responsible for managing the bus architecture and general processing, and the memory 520 can store data used by the processor 500 when performing operations.

The processor 500 may be a Central Processing Unit (CPU), an Application Specific Integrated Circuit, ASIC, a Field-Programmable Gate Array, FPGA or a Complex Programmable Logic Device, CPLD.

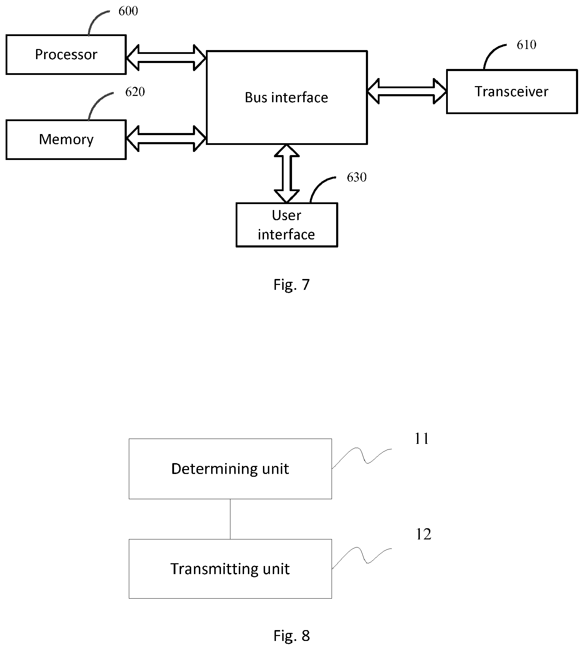

On the terminal side, referring to Fig. 7, a positioning apparatus provided by an embodiment of the present application includes:
a memory 620 configured to store program instructions;
a processor 600 configured to invoke the program instructions stored in the memory and execute following according to the obtained program:
   receiving recommendation information of Positioning Reference Signal, PRS; and
   receiving the PRS according to the recommendation information of PRS, and detecting the PRS.

In some embodiments, before receiving the recommendation information of PRS, the processor 600 is further configured to invoke program instructions stored in the memory and execute following according to the obtained program:
providing one or a combination of the following information to the network side:
PRS demand information;
MG information; or
capability about whether the terminal supports positioning measurement without measurement gap.

The positioning apparatus further includes a transceiver 610 configured to receive and transmit data under the control of processor 600.

In FIG. 7, the bus architecture may include any number of interconnected buses and bridges, specifically one or more processors represented by processor 600 and various circuits of the memory represented by memory 620 are linked together. The bus architecture can also link together various other circuits such as peripherals, voltage regulators, and power management circuits, which are all well known in the art and therefore will not be described further herein. The bus interface provides the interface. The transceiver 610 may be a plurality of elements, including a transmitter and a receiver, providing a unit for communicating with various other devices over a transmission medium. For different user equipment, the user interface 630 can also be an interface that can connect external and internal required equipment. The connected equipment includes but is not limited to a keypad, a display, a speaker, a microphone, a joystick, etc.

The processor 600 is responsible for managing the bus architecture and general processing, and the memory 620 can store data used by the processor 600 when performing operations.

In some embodiments, the processor 600 may be a Central Processing Unit (CPU), an Application Specific Integrated Circuit, ASIC, a Field-Programmable Gate Array, FPGA or a Complex Programmable Logic Device, CPLD.

On the LMF side, referring to Fig. 8, another positioning apparatus provided by the embodiment of the present application includes:
a determining unit 11 configured to determine the recommendation information of the Positioning Reference Signal, PRS;
a transmitting unit 12 configured to transmit the recommendation information of PRS to control PRS measurement to be performed in the measurement gap.

The determination unit 11 has the function of executing the method of determining the recommendation information of PRS as described in the above-mentioned LMF side positioning method, which will not be described again here.

The transmitting unit 12 has the function of executing various processes described in the above LMF side positioning method, which will not be described again here.

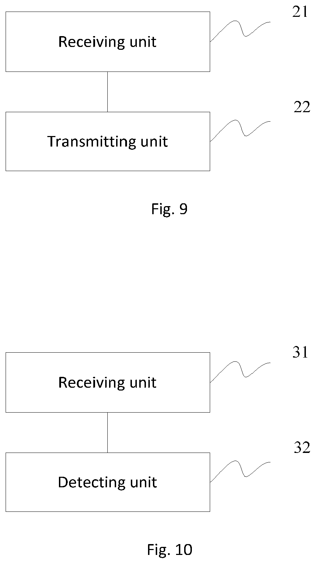

On the base station side, referring to Fig. 9, another positioning apparatus provided by an embodiment of the present application includes:
a receiving unit 21 configured to receive recommendation information of Positioning Reference Signal, PRS; and
a transmitting unit 22 configured to transmit a PRS according to the recommendation information of PRS.

In some embodiments, before receiving the recommendation information of PRS, the receiving unit 21 is further configured to: receive an information request from a Positioning Management Function, LMF, and transmit one or a combination of the following information to the LMF according to the information request:
PRS candidate configuration;
PRS configuration;
Measurement Gap, MG information; or
capability about whether the terminal supports positioning measurement without measurement gap.

In some embodiments, the transmitting the MG to the LMF includes:
before the serving cell initiates a positioning service request, notifies the LMF of the MG information of the terminal to be positioned; or
when the serving cell configures the PRS, notifies the LMF of the MG information of the terminal to be positioned.

In some embodiments, the transmitting unit 22 is further configured to request the terminal to report MG information.

In some embodiments, the receiving unit 21 is further configured to:
receive capability reported by the terminal as to whether the terminal supports positioning measurement without measurement gaps.

In some embodiments, the recommendation information of PRS is requested by the terminal or the base station.

On the terminal side, referring to Fig. 10, another positioning apparatus provided by an embodiment of the present application includes:
a receiving unit 31 configured to receive recommendation information of Positioning Reference Signal, PRS; and
a detection unit 32 configured to receive the PRS according to the recommendation information of PRS, and detect the PRS.

In some embodiments, before receiving the recommendation information of PRS, the receiving unit 31 is further configured to:
provide one or a combination of the following information to the network side:
PRS demand information;
MG information; or
capability about whether the terminal supports positioning measurement without measurement gap.

It should be noted that the division of units in embodiments of the present application is schematic and is only a logical function division. In actual implementation, there may be other division methods. In addition, each functional unit in various embodiments of the present application may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a computer-readable storage medium. Based on this understanding, the technical solution of the present application is essentially or contributes to the existing technology, or all or part of the technical solution can be embodied in the form of a software product, and the computer software product is stored in a storage medium, including several instructions to cause a computer device (which can be a personal computer, a server, or a network device, etc.) or a processor to execute all or part of the steps of the methods described in various embodiments of the application. The aforementioned storage media include: U disk, mobile hard disk, Read-Only Memory (ROM), Random Access Memory (RAM), magnetic disk or optical disk and other media that can store program code.

Embodiments of the present application provide a computing device, which may be a desktop computer, a portable computer, a smart phone, a tablet computer, a Personal Digital Assistant, PDA, etc. The computing device may include a Center Processing Unit, CPU, memory, input/output devices, etc. The input device may include a keyboard, a mouse, a touch screen, etc., and the output device may include a display device, such as a Liquid Crystal Display, LCD, a Cathode Ray Tube, CRT, etc.

Memory may include Read-Only Memory (ROM) and Random Access Memory (RAM) and provides the processor with program instructions and data stored in the memory. In this embodiment of the present application, the memory can be used to store the program of any of the methods provided in the embodiments of this application.

The processor invokes the program instructions stored in the memory, and the processor is configured to execute any of the methods provided by the embodiments of the present application according to the obtained program instructions.

Embodiments of the present application provide a computer storage medium for storing computer program instructions used for the apparatus provided by the above embodiments of the present application, which include programs for executing any of the methods provided by the above embodiments of the present application.

The computer storage medium may be any available media or data storage device that a computer can access, including but not limited to magnetic storage (such as floppy disks, hard disks, magnetic tapes, magneto-optical disks (MO), etc.), optical storage (such as CD, DVD, BD, HVD, etc.), and semiconductor memories (such as ROM, EPROM, EEPROM, non-volatile memory (NAND FLASH), solid state drive (SSD)), etc.

The methods provided by the embodiments of this application can be applied to a terminal device and a network device.

Here, the terminal device can also be called a User Equipment, referred to as "UE", a Mobile Station, referred to as "MS"), a mobile terminal, etc. In some embodiments, the terminal can have the ability to communicate with one or more core networks via the Radio Access Network (RAN). For example, the terminal can be a mobile phone (or "cellular" phone), or a mobile computer, etc. For example, the terminal may also be a portable, pocket-sized, handheld, computer-built-in or vehicle-mounted mobile device.

The network device may be a base station (e.g, and access point), which refers to a device in the access network that communicates with wireless terminals through one or more sectors over the air interface. The base station may be used to convert received air frames to and from IP packets and act as a router between the wireless terminal and the remainder of the access network, which may include an Internet Protocol (IP) network. The base station also coordinates attribute management of the air interface. For example, the base station can be a Base Transceiver Station (BTS) in GSM or CDMA, a base station (NodeB) in WCDMA, or an evolutionary NodeB (NodeB, eNB, e-NodeB, or evolutional Node B) in LTE. B, or it can also be gNB in the 5G system, etc. There are no limitations in the embodiments of this application.

The processing flow of the above method can be implemented with a software program. The software program can be stored in a storage medium. When the stored software program is invoked, the above method steps are executed.

Those skilled in the art should understand that the embodiments of the present application provide methods, systems, or computer program products. Accordingly, the present application can take the form of an entire hardware embodiment, an entire software embodiment, or an embodiment combining software and hardware aspects. Further, the present application may take the form of a computer program product implemented on one or more computer-usable storage medias (including but not limited to disk storage, CD-ROM, optical storage, etc.) having computer-usable program codes embodied therein.

The present application is described with reference to flowcharts and/or block diagrams of methods, apparatus (systems), and computer program products according to embodiments of the present application. It should be understood that each procedure and/or block in the flowcharts and/or block diagrams, and a combination of procedures and/or blocks in the flowcharts and/or block diagrams can be realized by computer program instructions. These computer program instructions may be provided to a general computer, dedicated computer, embedded processor, or a processor of other programmable data processing apparatuses to produce a machine, such that the instructions executed by the processor of the computer or other programmable data processing apparatuses produce an apparatus for realizing the functions specified in one or more procedures of the flowcharts and/or one or more blocks of the block diagrams.

These computer program instructions may also be stored in a computer-readable memory capable of directing a computer or other programmable data processing apparatus to operate in a specific manner, such that the instructions stored in the computer-readable memory produce an article of manufacture including an instruction apparatus. The instruction apparatus realizes the function specified in one or more procedures of the flowcharts and/or one or more blocks of the block diagrams.

These computer program instructions can also be loaded onto a computer or other programmable data processing apparatuses, causing a series of operations to be performed on the computer or other programmable apparatuses to produce a computer-implemented process, so that the instructions executed on the computer or other programmable apparatuses provide steps for implementing the functions specified in one or more procedures of the flowcharts and/or one or more blocks of the block diagrams.

Apparently, those skilled in the art can make various changes and modifications to the embodiments of the present application without departing from the spirit and scope of the embodiments of the present application. In this way, if these modifications and variations of the embodiments of the present application fall within the scope of the claims of the present application and their equivalent technologies, the present application also intends to include these modifications and variations.

## Claims

1. A positioning method, comprising:
determining recommendation information of Positioning Reference Signal, PRS; and
transmitting the recommendation information of PRS to control a PRS measurement to be performed in a Measurement Gap, MG.

2. The method according to claim 1, wherein the transmitting the recommendation information of PRS, comprises: transmitting the recommendation information of PRS to a base station.

3. The method according to claim 1, further comprising: transmitting a PRS configuration to a terminal.

4. The method according to claim 1, wherein the determining the recommendation information of PRS, comprises:
determining the recommendation information of PRS according to the MG that has configured for a terminal;
or
determining the recommendation information of PRS according to capability about whether a terminal supports a positioning measurement without the MG.

5. The method according to claim 4, further comprising:
receiving the capability reported by the terminal or a base station, about whether the terminal supports a positioning measurement without the MG, in a case that the recommendation information of PRS is determined according to the capability about whether the terminal supports a positioning measurement without the MG.

6. The method according to claim 5, further comprising: requesting the terminal or the base station to report the capability about whether the terminal supports the positioning measurement without the MG.

7. The method according to claim 4, further comprising: requesting the terminal or a base station to report MG information.

8. The method according to claim 1, further comprising:
receiving a PRS configuration transmitted by a base station, wherein the PRS configuration is determined by the base station based on the recommendation information of PRS; and
notifying a terminal of the PRS configuration transmitted by the base station.

9. The method according to claim 1, further comprising:
receiving a PRS candidate configuration transmitted by a base station; wherein the recommendation information of PRS is determined based on the PRS candidate configuration.

10. The method according to claim 1, further comprising:
transmitting the recommendation information of PRS to a terminal, wherein the recommendation information of PRS is configured to perform a positioning measurement by a terminal.

11. The method according to claim 1, wherein the recommendation information of PRS comprises recommended MG information; the transmitting the recommendation information of PRS comprises:
transmitting the recommended MG information to a serving base station of a terminal according to PRS configuration information of the terminal's serving cell and neighboring cells; or
transmitting the recommended MG information to the terminal before notifying a terminal of the PRS.

12. The method according to any one of claims 1 to 11, wherein the PRS is an on-demand PRS.

13. A positioning method, comprising:
receiving recommendation information of Positioning Reference Signal, PRS; and
transmitting the PRS according to the recommendation information of PRS.

14. The method according to claim 13, wherein before receiving the recommendation information of PRS, the method further comprises:
receiving an information request from a Location Management Function, LMF, and transmitting one or a combination of following information to the LMF according to the information request:
PRS candidate configuration;
PRS configuration;
Measurement Gap, MG. information; or
capability about whether the terminal supports positioning measurement without a MG.

15. The method according to claim 14, wherein the transmitting the MG information to the LMF, comprises:
notifying the LMF of the MG information of a terminal to be positioned before a serving cell initiates a positioning service request; or
notifying the LMF of the MG information of a terminal to be positioned in a case that a serving cell configures the PRS.

16. The method according to claim 15, further comprising: requesting the terminal to report the MG information.

17. The method according to claim 13, wherein the recommendation information of PRS comprises one or a combination of following:
on-demand PRS or a start time of the MG corresponding to the on-demand PRS;
on-demand PRS or a suspension time of the MG corresponding to the on-demand PRS;
on-demand PRS or a duration of the MG corresponding to the on-demand PRS;
on-demand PRS or a period of the MG corresponding to the on-demand PRS;
a testing opportunity of on-demand PRS;
on-demand PRS or a repetition quantity of the MG corresponding to on-demand PRS; or
a time slot comprising on-demand PRS.

18. The method according to claim 13, wherein the recommendation information is requested by a terminal or a base station.

19. A positioning method, comprising:
receiving recommendation information of Positioning Reference Signal, PRS; and
receiving the PRS according to the recommendation information of PRS, and detecting the PRS.

20. The method according to claim 19, wherein before receiving the recommendation information of PRS, the method further comprises:
providing one or a combination of following information to a network side:
PRS demand information;
Measurement Gap, MG, information; or
capability about whether a terminal supports positioning measurement without a MG.

21. A positioning apparatus, comprising:
a memory configured to store program instructions;
a processor configured to invoke the program instructions stored in the memory and execute following according to the program instructions:
determine recommendation information of Positioning Reference Signal, PRS; and
transmit the recommendation information of PRS to control PRS measurement to be performed in a Measurement Gap, MG.

22. The apparatus according to claim 21, wherein the processor transmits the recommendation information of PRS to a base station.

23. The apparatus according to claim 21, wherein the processor is further configured to invoke the program instructions stored in the memory and execute following according to the program instructions: transmit a PRS configuration to a terminal.

24. The apparatus according to claim 21, wherein the processor is further configured to invoke program instructions stored in the memory and execute according to the program instructions:
transmit the recommendation information of PRS to a terminal, wherein the recommendation information of PRS is configured to perform a positioning measurement by a terminal.

25. The apparatus according to claim 21, wherein the recommendation information of PRS comprises recommended MG information; the transmitting the recommendation information of PRS comprises:
transmit the recommended MG information to a serving base station of a terminal according to a configuration information of PRS of the terminal's serving cell and neighboring cells; or
transmit the recommended MG information to the terminal before notifying a terminal of the PRS.

26. The apparatus according to any one of claims 21 to 25, wherein the PRS is an on-demand PRS.

27. A positioning apparatus, comprising:
a memory configured to store program instructions;
a processor configured to invoke the program instructions stored in the memory and execute following according to the program instructions:
receive recommendation information of Positioning Reference Signal, PRS; and
transmit the PRS according to the recommendation information of PRS.

28. The apparatus according to claim 27, wherein before the receiving the recommendation information of PRS, the processor is further configured to invoke program instructions stored in the memory and execute following according to the program instructions:
receive an information request from a Location Management Function, LMF, and transmit one or a combination of the following information to the LMF according to the information request:
PRS candidate configuration;
PRS configuration;
Measurement Gap, MG, information; or
capability about whether a terminal supports positioning measurement without a MG.

29. A positioning apparatus, comprising:
a memory configured to store program instructions;
a processor configured to invoke the program instructions stored in the memory and execute following according to the program instructions:
receive recommendation information of Positioning Reference Signal, PRS; and
receive the PRS according to the recommendation information of PRS, and detecting the PRS.

30. A positioning apparatus, comprising:
a determining unit configured to determine recommendation information of Positioning Reference Signal, PRS; and
a transmitting unit configured to transmit the recommendation information of PRS to control PRS measurement to be performed in a Measurement Gap, MG.

31. The apparatus according to claim 30, wherein the transmitting unit is further configured to transmit the recommendation information of the PRS to a base station.

32. The apparatus according to claim 30, wherein the transmitting unit is further configured to transmit a PRS configuration to a terminal.

33. The apparatus according to claim 30, where the transmitting unit is further configured to:
transmit the recommendation information of PRS to a terminal, wherein the recommendation information of PRS is configured to perform a positioning measurement by a terminal.

34. The apparatus according to claim 30, wherein the recommendation information of PRS comprises recommended MG information; in a case that the recommendation information of PRS is transmitted, the transmitting unit is configured to:
transmit recommended MG information to a serving base station of a terminal according to a PRS configuration information of the terminal's serving cell and neighboring cells; or
transmit the recommended MG information to a terminal before notifying the terminal of the PRS.

35. The apparatus according to any one of claims 30 to 34, wherein the PRS is an on-demand PRS.

36. A positioning apparatus, comprising:
a receiving unit configured to receive recommendation information of Positioning Reference Signal, PRS; and
a transmitting unit configured to transmit a PRS according to the recommendation information of PRS.

37. The positioning apparatus according to claim 36, wherein the receiving unit is further configured to: receive an information request from a Location Management Function, LMF before receiving the recommendation information of the PRS;
the transmitting unit is further configured to transmit one or a combination of following information to the LMF according to the information request:
PRS candidate configuration;
PRS configuration;
Measurement Gap, MG, information; or
capability about whether the terminal supports positioning measurement without a MG.

38. A positioning apparatus, comprising:
a receiving unit configured to receive recommendation information of Positioning Reference Signal, PRS; and
a detection unit configured to receive the PRS according to the recommendation information of PRS, and detect the PRS.

39. A computer-readable storage medium, storing computer-executable instructions, and the computer-executable instructions are configured to cause a computer to execute the method described in any one of claims 1 to 20.

40. A computer program product, causing a computer to execute the method according to any one of claims 1 to 20, in a case that the computer program product is invoked by the computer.
